# EUROPEAN PATENT APPLICATION

(11) **EP 2 700 389 A1**
(43) Date of publication of application: **26.02.2014**
(21) Application number: 13181584.7
(22) Date of filing: 23.08.2013
(51) Int. Cl.: A61G 3/08, B60P 3/12, B60P 1/43

(54) **Towed vehicle for transporting a wheelchaired person**

(30) Priority: 23.08.2012 SE 1250947
(71) Applicant: Machner, Andre, 830 51 Offerdal (SE)
(72) Inventor: Machner, Andre, 830 51 Offerdal (SE)
(74) Representative: Karlsson, Mona

(57) **Abstract**

The invention relates to a towed vehicle (100) for transporting a wheelchair with the user placed therein, which vehicle is a towed terrain vehicle. The towed terrain vehicle has a front end and a rear end, and it comprises a chassis (102), a whether protection (104) mounted at the chassis, and base contact members (112) connected with the chassis at either side thereof. The chassis comprises a floor, a ramp arranged at the rear end, and pivotable between a raised and a lowered position, a tow device arranged at the front end, and a fastening device (114) for fastening the wheelchair. Furthermore, the chassis comprises a tiltable platform part, which includes the ramp.

## Description

### FIELD OF TECHNOLOGY

The present invention relates to a towed vehicle for transporting a wheelchaired person.

### BACKGROUND TECHNOLOGY

For a person who is physically disabled and is bound to a wheelchair in order to be able to move, it is always more troublesome than for a non-wheelchaired person to transport himself longer distances. However, there are different vehicles being employable, such as cars, buses, etc., which still make road transports fairly reasonable. There is a bigger step to overcome in order to get out in the nature, in summer as well as in winter. For those persons who have the ability and opportunity to drive a terrain vehicle on their own and/or to relatively simply move themselves from the wheelchair to another vehicle, for instance, a snowmobile or a snowmobile sleigh in those areas where it is possible to drive a snowmobile, or a four wheeler or a trailer for transportation of persons, which is couplable to a four-wheeler, on bare ground.

However, there are many occasions when it is not suitable or possible to move the wheelchaired person from the wheel chair to such a vehicle, and then there is offered no opportunity to access roadless terrain.

### SUMMARY OF THE INVENTION

One object of the present invention is to provide a towed vehicle, which allows transportation in the terrain of a wheelchaired person sitting in his wheelchair.

This object is obtained by means of a towed vehicle according to the invention as defined in claim 1.

Consequently, according to one aspect of the invention, there is provided a towed vehicle for transporting a wheelchair with the user placed therein, which vehicle is a towed terrain vehicle comprising a front end and a rear end, and comprising a chassis and a whether protection mounted at the chassis, wherein the chassis comprises a floor, a ramp arranged at the rear end, and pivotable between a raised and a lowered position, a tow device arranged at the front end, base contact members at either side of the towed terrain vehicle, and a fastening device for fastening the wheelchair. The chassis comprises a tiltable platform incorporating the ramp. Due to the pivotable ramp and the tiltable platform it is easy to board the wheelchair, i.e. roll it onto the platform. Due to the weather protection and the fastening device a wheelchaired person may sit proctected and well fastened and have a nature experience during summer as well as winter. By means of the tow device the towed terrain vehicle is couplable to different terrain vehicles, such as ATV (All Terrain Vehicle), generally named four-wheelers, and snowmobiles. All together, this provides a vehicle which is attractive for its purpose, comfortable enough and secure, but at the same time easy to use. It should be noted that even if the towed vehicle is a towed terrain vehicle, that does not exclude that the towed vehicle is also capable of being used on roads, like many terrain vehicles, but it is particularly designed to be usable in terrain in contrast to towed vehicles, which are intended to be used on roads only.

In accordance with an embodiment of the towed terrain vehicle, the chassis comprises a support frame part, which is hingedly connected with the platform part to enable tilting of the platform part relative to the support frame part.

In accordance with an embodiment of the towed terrain vehicle, it comprises a biased spring member, which is arranged between the platform part and the support frame part, and which is configured to tilt the platform part. Consequently, the spring member tilts the platform, but it has the additional function of slowing down movement when the platform returns to the starting position, which facilitates the loading of the towed terrain vehicle.

In accordance with an embodiment of the towed terrain vehicle, the base contact members comprise at least one of a wheel assembly, a ski assembly, and a water assembly, which are interchangeable. Thereby, it is simple to adapt the towed vehicle to present base conditions. Thus, in the most complete version the towed terrain vehicle is usable on bare ground, snow, and water by adapting the choice of base contact members.

In accordance with an embodiment of the towed terrain vehicle, the fastening device encompasses the ramp, a tensioning device for tensioning the ramp, in its raised position, against rear portions of the rear wheels of the wheelchair, and an abutment member configured to, in a fastened position, abut against front portions of the rear wheels. Thereby a stable fastening of the wheelchair is obtained. It should be noted that, consequently, the ramp has a double function in being both a roll on-roll off ramp and a part of the device for fastening the wheelchair in the towed terrain vehicle.

In accordance with an embodiment of the towed terrain vehicle, the abutment member comprises a bar, which is adjustable along the length of the floor. Thereby, the fastening device is adjustable for many different types of wheelchairs. Preferably, the bar is mountable and demountable by means of quick couplings operable by hand.

Since the bar thereby is easily demountable, it is easy to remove it during the boarding of the wheelchair and then remount it to fasten the wheelchair.

In accordance with an embodiment of the towed terrain vehicle, the ramp comprises a releasable automatic catch locking the ramp in the lowered position. Thereby, there is no risk for the ramp to pivot upwards during the boarding of the wheelchair.

In accordance with an embodiment of the towed terrain vehicle, the automatic catch comprises a catch arm, which is hingedly attached at one of its ends, and which has a first catch element, and a second catch element fixed to the chassis. The catch arm is arranged to move during lowering of the ramp so that the first catch element engages with the second catch element. Structurally, this embodiment is a simple solution.

In accordance with an embodiment of the towed terrain vehicle, the weather protection and the base contact members are demountable, and the chassis comprises a support frame part including the tow device, and being demountably attached to the platform part. Thereby it is possible to fold the towed terrain vehicle to a compact assembly kit, which is transportable in the boot of a car and does not require any trailer for transportation thereof.

In accordance with an embodiment of the towed terrain vehicle, the weather protection is a demountable cover, which comprises a demountable main piece forming a front wall and a roof of the towed terrain vehicle, and two demountable side pieces, which are arranged along the sides of the towed terrain vehicle forming side walls. Since the cover is demountable, the nature experience can be adapted to the person, and to the current weather, and the size of the towed terrain vehicle can be reduced in conjunction with transporting and storing it. As regards the side pieces, it is experienced as a security by the wheelchaired person to have walls on the vehicle. However, it is an advantage to be able to demount the side pieces in conjunction with boarding and fastening the wheelchair, and when the towed terrain vehicle is parked.

### BRIEF DESCRIPTION OF THE DRAWINGS

The invention will now be described in more detail and with reference to the appended drawings, in which:
Figs. 1 and 6 schematically, in perspective views, show an embodiment of the towed vehicle according to the present invention;
Figs. 2a, 2b, 3, and 4 schematically, in perspective views, show embodiments of different parts of the towed vehicle according to the invention;
Fig. 5 is a schematic side view of the towed vehicle connected with a traction vehicle; and
Fig. 7 is a schematic perspective view of another embodiment of the towed vehicle according to the invention.

### DESCRIPTION OF EMBODIMENTS

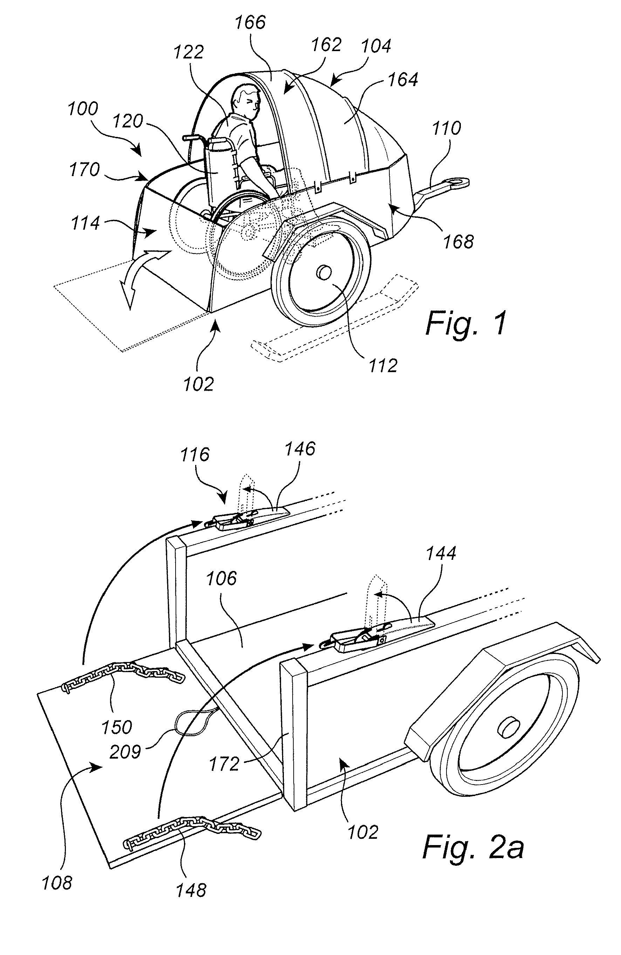

The towed vehicle according to the invention is a towed terrain vehicle 100 for transporting a wheelchair 120 with the user 122 sitting in it. The towed terrain vehicle is arranged to be useable on bare ground, snow as well as water, and it comprises a chassis 102, and a weather protection 104 mounted on the chassis, the weather protection constituting a body, and consisting of, in this embodiment, a demountable cover comprising a flexible sheet of cover fabric, plastic cloth, or the like, which is arranged on a framework. A possible alternative is a fixed weather protection, such as a plastic body, but as evident from below, the demountability is an advantage. The chassis comprises a floor 106, and a ramp 108, which is arranged at the rear end of the towed terrain vehicle 100, and which is pivotable between a raised position and a lowered position. Hence, the ramp is pivotably connected with the floor at a horizontal pivot axis. The chassis 102 further comprises a tow device 110, which is arranged at the front end of the towed terrain vehicle 100. The towed terrain vehicle 100 furthermore comprises base contact members 112, which are connected with the chassis 102 at either side of the chassis 102. In the drawings, the base contact members 112 are shown as ground contact members constituted by wheel assemblies, i.e. wheels having couplings for mounting the wheels at the chassis 102. However, as indicated by broken lines in figure 1, also base contact members 112 constituted by ski assemblies, i.e. another kind of ground assemblies, are part of the equipment of the towed terrain vehicle 100. The base contact members 112 are easily mountable/demountable and their kind is chosen in dependence of the type of base. Additionally, it is possible to mount water assemblies, such as pontoons. However, as realized, it is not necessary, although advantageous, to provide more than one type of base contact members. Consequently, the towed terrain vehicle is useful at more or less any type of base. Furthermore, the towed terrain vehicle 100 comprises a fastening device 114 for fastening the wheelchair 120.

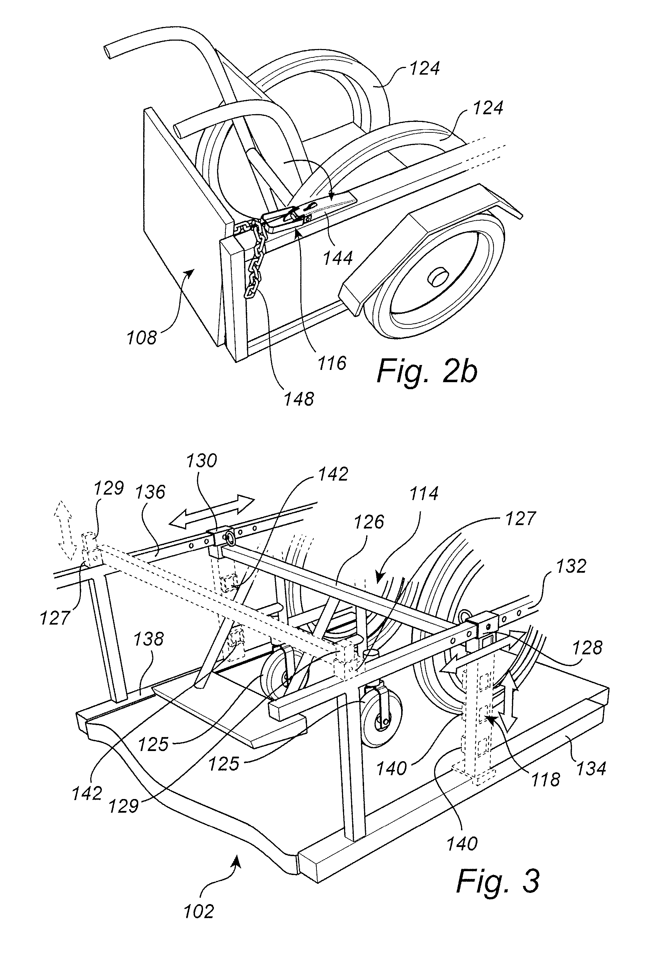

The fastening device 114 comprises partly the ramp 108 and a tensioning device 116 for tensioning the ramp 108, in its raised position, against rear portions of the rear wheels 124 of the wheelchair, as shown in figures 2a and 2b, partly an abutment member 118, which is arranged to, in a fastened position, abut against front portions of the rear wheels 124, as shown in figure 3, or alternatively against a strong enough portion of the frame of the wheelchair above its front wheels. The abutment member 118 comprises a bar 126, which is adjustable along the length of the floor 106, i.e. the bar 126 is displaceable along the length of the towed terrain vehicle 100, and bar holders 128, 130, into which the bar 126 is mountable. The bar 126 is mountable and demountable by means of a quick coupling operated by hand. The bar 126 has a rigid position in height, which is chosen to fit for fastening common wheelchairs against their rear wheels 124 or against the frame above their front wheels 125. The bar holders 128, 130 are displaceably attached to upper frame beams 132, 136 of the chassis 102, which frame beams 132, 136 are arranged at the long sides of the chassis 108. According to an alternative embodiment the bar holders 128, 130 are displaceably attached to upper and lower frame beams 132, 134, 136, and 138, of the chassis 102, which frame beams 132, 134, 136, 138 are arranged at the long sides of the chassis 108, as shown by broken lines in figure 3. In this alternative embodiment, each bar holder 128, 130 comprises several bar seats 140, 142, which are arranged on top of each other in order to provide different positions of height for the bar 126. The bar seats 140, 142 are through holes in one of the bar holders 128, and box shaped in the other bar holder 130.

The tensioning device 116 comprises two eccentric tensioners 144, 146, which are provided with hooks and which are attached to a respective one of the upper frame beams 132, 134, close to their rear ends, and ramp links 148, 150, e.g. chains, having several different connection positions, which are attached to the ramp 108.

The ramp 108 comprises a releasable automatic catch 154, which locks the ramp in the lowered position. The automatic catch 154 comprises a catch arm 156, which is hingedly attached at one of its ends, and which has a first catch element 158, here constituted by a first heel. Furthermore, the automatic catch 154 comprises a second catch element 160 fixed to the floor 106 ro to some other suitable part of the chassis 102. The first heel 158 is arranged to engage with the second heel 160.

The cover 104 comprises a main piece 162, which forms a front wall 164 and a roof 166 of the towed terrain vehicle 100, and two side pieces 168, 170, which form side walls of the towed terrain vehicle 100. The side pieces 168, 170 extend along the sides of the chassis 102, and they are releasably connected with the chassis 102. More particularly, each side piece 168, 170 comprises two end posts, which have been received in tubular vertical frame beams 172 at the rear and front ends of the floor 106. Furthermore, the main piece of the cover 104 is releasably connected with the chassis 102, such that it is simple to remove and to mount, and, preferably, it is divided into the rood 166 and the front wall 164 for increased flexibility. The front wall 164, and preferably the roof 166 as well, have transparent portions, and thereby the person sitting in the towed terrain vehicle 100 has a good sight even when the cover is mounted. Alternatively, or in addition to the above, the main piece 162 can be partly collapsible when mounted at the towed terrain vehicle 100. The cover 104 is easily foldable when demounted.

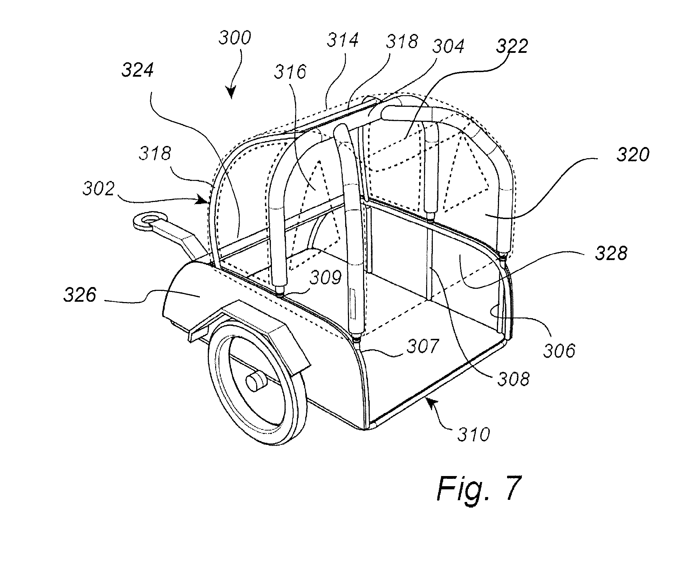

According to an embodiment of the towed terrain vehicle 300, some parts of which are shown in Fig. 7, the cover 302 comprises a protection bar, which has four curved interconnected tube portions, the free ends of which are mounted at vertical frame beams 306, 307, 308, 309, at the rear end of and at the middle of the chassis 310. The protection bar 304 extends above the person being transported, and is arranged to be covered by the cloth of the cover 302, preferably by a transparent front portion 314 and transparent upper side portions 316, respectively. The cover 302 comprises, in this embodiment, front rods 318, which stretch the front transparent portion 314 forwards to become substantially U-shaped seen in a horizontal cross-section. Like the rest of the cover, the protection bar 304 is removable and foldable. The upper portions of the cloth of the cover 302 have merely been indicated by broken lines in order for the protection bar 304 to appear well. In this embodiment the cover comprises a main portion, which has a lower front portion 324, if desired including rods (not shown), and an upper front portion consisting of the front transparent portion 314 and the front rods 318. The lower and upper portions can be made in one piece or dividable by means of a zip fastener or the like. Further, the cover comprises a rear piece including a rear portion 320, which is arranged behind the transported person, and the side pieces 316 in one piece. In order to secure the tightness at the top at the transition between the main piece and rear piece, the protection bar is provided with a smaller roof portion 322. The cover 302 further includes two demountable side pieces 326, 328, which are arranged along the sides of the towed vehicle and form side walls, which inter alia completes the cover 302 below the upper side pieces 316 and divides the front transparent portion 314.

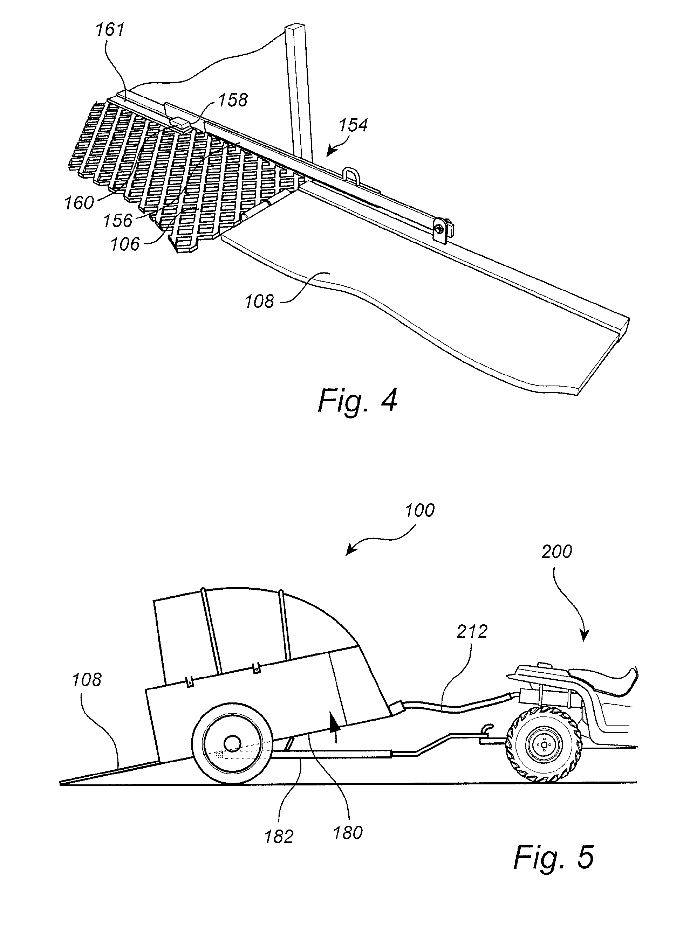

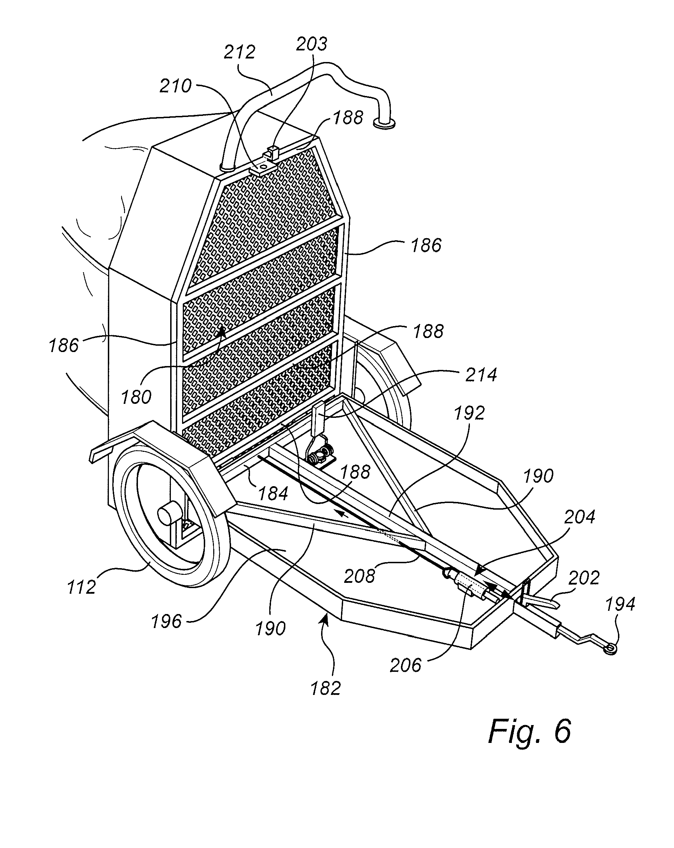

The chassis comprises a tiltable platform part 180 and a support frame part 182. The ramp 108 is included in the platform part 180. The support frame part 182 is hingeably connected with the platform part 180 at a mounting beam 184 at the ends of which the base contact members 112 are demountably mounted. This is shown in figure 5, where the platform part 180 of the towed terrain vehicle 100 has been tilted rearwards so that the rear edge of the lowered ramp 108 abuts against the base, and in figure 6, where the towed terrain vehicle 100 stands on its rear end having the support frame part 182 resting on the base in order to show construction details which are not shown in any other figure. The hinged connection between the platform part 180 and the support frame part 182 can alternatively be placed behind the mounting beam 184, but it is an advantage that the platform part 180 pivots about the centre axis for the connections of the base contact members 112. That the platform part 180 is tiltable means that the ramp and the floor 106 can be in the same plane when the platform has been tilted, and thereby it is easy to roll the wheelchair on and off. Moreover, the ramp 108 and its automatic catch 154 are arranged such that the ramp becomes locked in the same plane as the floor 106 when it is lowered. The platform part 180 additionally comprises the floor 106 of the towed terrain vehicle 100, and longitudinal and lateral platform beams 186, 188, at least some of which are connected with the floor 106.

The support frame part 182 comprises support frame beams 184, 190, 192, one of which is a longitudinal centre beam 192, which has a front portion 194 that works as a tow bar and which has a tow ring at its front end. The front portion 194 preferably is constituted by a demountable element, which is exchangeable for a ball grip, since some tow vehicles have a hook as a tow member and others have a ball. The rear end of the centre beam 192 is connected with the mounting beam 184, which constitutes a lateral rearmost beam of the support frame beams 190, while the platform part 180 protrudes behind that lateral beam of the platform beams 188 which is hingedly connected, via hinges 194, with the mounting beam 184. Further, the support frame part comprises a, preferably plastic, protection plate 196, which is arranged at the underside of the support frame beams 184, 190, 192, and which has fold up edges. The protection plate 196 protects the user 122 against dirt and snow that could otherwise come up through the net shaped floor 106. At the same time there is a minor distance between the floor 106 and the protection plate 196 making it possible for dirt and snow to fall down through the floor, thereby reducing the risk of slipping on top of the floor 106.

When the towed terrain vehicle is in a transport position, the platform part 180 is locked to the support frame part 182 by means of first and second locking elements 202, 204. The first locking element 202, e.g. a so called platform lock, is mounted at the centre beam 192 just above the protection plate 196, and is operable for locking respectively releasing a hook 203, which is mounted at a front edge of the platform part 180. The second locking element 204 comprises a snap lock 206 arranged at the front edge of the protection plate, and, in this embodiment, it has a sleeve with a biased locking pin , which extends through the sleeve and is biased towards a locking position where it protrudes from the sleeve, and an operation wire 208. The operation wire extends rearwards along the centre beam to the rear end of the floor 106 where it is ended by a loop 209, which protrudes between the floor 106 and the ramp108. The platform part 180 is provided with a lip 210 having a recess with which the locking pin of the locking element 204 is engaged in a locked position. As a principle the first or the second locking element can be omitted, but the second locking element provides a smooth tilting that is controllable from the rear, and the first locking element provides an extra security during the transport of the user. Therefore, it is preferred to arrange both locking elements 202, 204. Furthermore, the platform part 180 comprises an exhaust tube 212, which is connectable to the exhaust pipe of the towing vehicle. The rear end of the exhaust tube 212 is connected with a front lateral support frame beam 188, and the exhaust fumes are guided through the longitudinal frame beams 186 and are let out at the rear end of the towed terrain vehicle 100. Thereby the risk that the user would be exposed to the exhaust fumes from the towing vehicle is decreased.

In order to facilitate the tilting of the platform part 180 relative to the support frame part 182, a biased spring member, constituted by a spring biased arm 214, is mounted at the centre beam close to the mounting beam 184. The arm 214 is forced by the spring bias to rotate upwards about one end thereof, and thereby it tilts the platform part 180 as the first and second locking elements 202, 204 are being released, and the towed terrain vehicle 100 is not loaded. At the same time it dampens the return of the platform part 180 to the transport position when a wheelchaired person rolls onto the towed terrain vehicle 100. The spring member 214 can be designed in many different ways, and, alternatively it can be mounted at the platform part 180. However, its basic function is to act with a force that forces the platform part and the support frame part 182 to swing away from each other.

The whole towed terrain vehicle can be collapsed with just a few hand grips, and thereby it becomes transportable in the boot of an estate car. This is done as follows. The ramp is pivoted forward until it rests on the floor 106. The base contact members 112 are demounted and placed in the boot of the car. The cover 104, including the side pieces 168, 170, and, if present, the protection bar 304, are demounted, collapsed and placed on the floor 106. Thereafter, the collapsed towed terrain vehicle is hosted into the boot of the car and placed next to the base contact members 112. If needed, the platform part 180 and the support frame part 182 are easily separated from each other at the hinged connection at the mounting beam 184, and put on top of each other in the boot. Thereby the total length of the collapsed towed terrain vehicle becomes shorter.

A wheelchair 120 with the user 122 in it is rolled up onto the towed terrain vehicle 100 in the following way. The quick coupling of the bar 126 is released and the bar 126 is pulled out of the bar holders 128, 130. The eccentric tensioners 144, 146 are released and the ramp 108 is lowered to the lowered position, as shown with broken lines in figure 1. When the ram 108 is lowered the catch arm 156 is arranged to move rearwards until the first catch element 18 engages with the second catch element 160. Then the automatic catch 154 is in a blocking position where it prevents the ramp 108 to become unintentionally raised during the rolling on. Now the ramp is in the same plane as the floor 106. The first locking element 202 is released. The second locking element 204 is released from the rear end of the towed terrain vehicle 100 by pulling the loop 209 of the wire 208, and the platform part 180 of the chassis is tilted rearwards so that the rear edge of the ramp 108 reaches the base. Then the wheelchair 120 with the user 122 is rolled onto the towed terrain vehicle 100 and is stopped in a suitable position. During the roll on the platform part 180 returns with a movement which becomes controlled and calm due to the arm 214. The second locking element 204 is automatically locked and then the first locking element 202 is manually locked.

Next the bar holders 128, 130 are adjusted along the length of the towed terrain vehicle 100 such that the position of the abutment member is adapted to the structure of the wheelchair 120. The bar 126 is pushed in as high as possible in dependence of the structure of the wheelchair, and such that the rear wheels 124 of the wheelchair 120 are able to abut against the bar , which is then fastened. If the rear wheels 124 do not abut against the bar 126 the wheelchair is pushed forwards until abutment is obtained. Finally, the automatic catch 154 is released by lifting the catch arm enabling the catch elements 158, 160 to disengage, and then the ramp 108 is raised and tensioned forwards, by means of the eccentric tensioners 144,146, against the rear wheels of the 124 wheelchair, such that the rear wheels are clamped between the ramp 108 and the bar 126. Some kinds of electric wheelchairs have a structure that does not allow locking of the rear wheels, but locking can then be obtained between the ramp 108 and the bar 126 as arranged into abutment with some appropriate front frame part of the wheelchair. Whenever applicable, there might be a need for additional holders 127 for the bar 126, which are arranged at supports 129 of the side pieces, in order to be able to arrange the bar high enough, as shown with broken lines in figure 3.

Above embodiments of the towed terrain vehicle according to the present invention have been described. These embodiments should be regarded as non-limiting examples. As realized by the person skilled in the art many modifications and alternative embodiments are feasible within the scope of the invention, as defined in the appended claims.

## Claims

1. A towed vehicle for transporting a wheelchair with the user placed therein, which vehicle (100) is a towed terrain vehicle comprising a front end and a rear end, and comprising a chassis (102) a weather protection (104) mounted at the chassis, and base contact members (112) connected with the chassis at either side thereof, wherein the chassis comprises a floor (106), a ramp (108) arranged at the rear end, and pivotable between a raised and a lowered position, a tow device (110) arranged at the front end, and a fastening device (114) for fastening the wheelchair, and wherein the chassis comprises a platform part (180), which is tiltable and which includes the ramp.

2. The towed vehicle according to claim 1, wherein the chassis comprises a support frame part (182), which is hingedly connected with the platform part (180) to enable tilting of the platform part relative to the support frame part.

3. The towed vehicle according to claim 2, comprising a biased spring member (214), which is arranged between the platform part (180) and the support frame part (182), and which is configured to tilt the platform part.

4. The towed vehicle according to claim 1, 2 or 3, wherein the fastening device (114) encompasses the ramp (108), a tensioning device (116) for tensioning the ramp, in its raised position, against rear portions of the rear wheels (124) of the wheelchair (120), and an abutment member (118) configured to, in a fastened position, abut against front portions of the rear wheels.

5. The towed vehicle according to claim 4, wherein the abutment member (118) comprises a bar (126), which is adjustable along the length of the floor (106).

6. The towed vehicle according to any one of the preceding claims, wherein the ramp (108) comprises a releasable automatic catch (154) locking the ramp in the lowered position.

7. The towed vehicle according to claim 6, wherein the automatic catch (154) comprises a catch arm (156), which is hingedly attached at one of its ends, and which has a first catch element (158), and a second catch element (160) fixed to the chassis (102), wherein the catch arm is arranged to move during lowering of the ramp (108) so that the first catch element engages with the second catch element.

8. The towed vehicle according to any one of the preceding claims, wherein the weather protection (104) and the base contact members (112) are demountable, and wherein the chassis (102) comprises a support frame part (182) including the tow device (110), and being demountably attached to the platform part (180).

9. The towed vehicle according to any one of the preceding claims, wherein the weather protection (104) is a demountable cover (312), which comprises a protection bar (304).

10. The towed vehicle according to claim 9, wherein the cover comprises a demountable main piece, which has a lower front portion (324), and an upper front portion including a transparent front portion (314) and front rods (318), a demountable rear piece including a rear portion (320), which is arranged behind the transported person, and transparent upper side portions (316), and also two demountable side pieces (326), (328), which are arranged along the sides of the towed vehicle and form side walls, and wherein the protection bar (304) is provided with a roof portion (322) at a top transition between the main piece and the rear piece.

11. The towed vehicle according to claim 9, wherein the cover comprises a demountable main piece (162), forming a front wall (164) and a roof (166) of the towed vehicle (100), and two demountable side pieces (168), (170), which are arranged along the sides of the towed vehicle forming side walls.

12. The towed vehicle according to any one of the preceding claims, wherein the base contact members (112) comprise at least one of a wheel assembly, a ski assembly, and a water assembly, which are interchangeable.

13. The towed vehicle according to any one of the preceding claims, comprising a biased spring member (214), which is arranged between the platform part (180) and the support frame part (182), and which is arranged to dampen the return of the platform part to the transport position from a tilted position, when a person sitting in the wheelchair is rolled onto the towed vehicle.
